Europäisches Patentamt

European Patent Office

Office européen des brevets

(19)

(11) Veröffentlichungsnummer: **0 229 225 B1**

(12) **EUROPÄISCHE PATENTSCHRIFT**

(45) Veröffentlichungstag der Patentschrift: **21.11.91**

(51) Int. Cl.⁵: **G01F 23/28**

(21) Anmeldenummer: **86113164.7**

(22) Anmeldetag: **24.09.86**

(54) **Einrichtung zur Erfassung des Füllstandes in einem Behälter.**

(30) Priorität: **10.12.85 DE 3543528**

(43) Veröffentlichungstag der Anmeldung:
**22.07.87 Patentblatt 87/30**

(45) Bekanntmachung des Hinweises auf die
Patenterteilung:
**21.11.91 Patentblatt 91/47**

(84) Benannte Vertragsstaaten:
**DE FR GB SE**

(56) Entgegenhaltungen:
**DE-A- 2 429 495**
**GB-A- 1 512 233**

(73) Patentinhaber: **VDO Adolf Schindling AG**
**Gräfstrasse 103**
**W-6000 Frankfurt/Main 90(DE)**

(72) Erfinder: **Ziegler, Klaus**
**Am Hofrain 8**
**W-7743 Furtwangen 6(DE)**

(74) Vertreter: **Klein, Thomas, Dipl.-Ing. (FH)**
**Sodener Strasse 9 Postfach 6140**
**W-6231 Schwalbach a. Ts.(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Einrichtung zur Erfassung des Füllstandes von insbesondere einer Flüssigkeit in einem Behälter, mit einem fest auf einer Membran angeordneten elektromechanischen Wandler, durch den die Membran in Schwingungen versetzbar ist und elektrischen Mitteln zur Feststellung der Schwingungen der Membran, sowie mit einer Halterung der Membran an der die Membran über ein zylindrisches Zwischenstück befestigt ist.

Eine derartige Einrichtung ist aus GB-A-1512233 bekannt.

Derartige bekannte Einrichtungen dürfen keine sehr hohe Empfindlichkeit gegen die verschiedensten äußeren Einflüsse, die auf sie einwirken, besitzen. Diese Einflüsse dürfen die Funktion der Einrichtung nicht beeinträchtigen. Zu solchen Einflüssen gehören z.B. Verspannungen der Membran, die durch Temperaturschwankungen oder durch Deformationen bei der Befestigung des zylindrischen Zwischenstücks bzw. der Halterung hervorgerufen werden. Weiterhin kann es auch zu akustischen Beeinträchtigungen der Membran kommen, die zu Einbußen des Meßeffekts führen können.

Aufgabe der Erfindung ist es daher, eine Einrichtung nach dem Oberbegriff zu schaffen, die auf einfache und kostengünstige Weise eine hohe Meßempfindlichkeit bei gleichzeitiger Unempfindlichkeit gegen o.g. äußere Einflüsse aufweist. Diese Aufgabe wird erfindungsgemäß dadurch gelöst, daß die Halterung einen Halteansatz aufweist, der mit Spiel von dem zylindrischen Zwischenstück umgreifbar ist, wobei das Zwischenstück durch ein Zwischenhalteansatz am Zwischenstück angeordnetes elastisches Spielausgleichselement an dem Halteansatz angeordnet ist. Diese Ausbildung führt zu einer fast vollständigen Entkopplung von Membran und Zwischenstück von der Halterung, so daß äußere Einflüsse weitgehend von der empfindlichen Membran ferngehalten werden. Gleichzeitig wird eine Schwingungsübertragung von der Membran auf die Halterung vermieden, so daß die Schwingungsenergie des elektromechanischen Wandlers, der ein piezoelektrisches Bauelement sein kann, auf die Membran konzentriert bleibt, ohne daß es zu einem Energieentzug von dem Meßglied kommen kann. Dies ermöglicht einen optimalen Meßeffekt.

Um eine gleichmäßige Halterung zu erhalten, kann der Halteansatz zylindrisch ausgebildet sein.

Dabei wird eine sowohl einfach herstellbare als auch sichere Halterung erreicht, wenn der Halteansatz eine an seiner zylindrischen Mantelfläche radial umlaufende Ringnut aufweist, in der ein das Spielausgleichselement bildender O-Ring angeordnet ist.

Um ein Lösen des Zwischenstücks vom Halteansatz zu verhindern, in dem das Zwischenstück axial vom Halteansatz weggleitet, kann zwischen dem zylindrischen Zwischenstück und dem Halteansatz ein eine axiale Relativbewegung dieser beiden Teile verhinderndes Sicherungselement angeordnet sein.

Eine vorteilhafte Ausgestaltung besteht dabei darin, daß das zylindrische Zwischenstück radial nach innen gerichtete Sicherungsarme besitzt, die in eine Ausnehmung des Halteansatzes ragen. Einfach herstellbar ist es, wenn die Ausnehmung eine an der zylindrischen Mantelfläche des Ansatzes radial umlaufende Ringnut ist. Ohne zusätzliche Bauteile kommt man aus, wenn die Sicherungsarme radial nach innen in die Ausnehmung des Ansatzes verformte Ausklinkungen der zylindrischen Wand des Zwischenstückes sind. Diese Ausbildung ist leicht herstellbar und ermöglicht auch eine einfache Montage.

Ebenfalls einfach herstellbar ist es, wenn Membran und zylindrisches Zwischenstück ein topfartiges einteiliges Bauteil bilden. Dabei geht vorzugsweise die Membran an ihrem radial umlaufenden Rand mit einem Radius in das zylindrische Zwischenstück über. Je größer dieser Radius ist, um so unbeeinflußter sind die Schwingungen der Membran vom Zwischenstück.

Das Spielausgleichselement ist vorzugsweise im Bereich der der Halterung zugewandten Öffnung des zylindrischen Zwischenstücks angeordnet, da eine Beeinflussung der Schwingungen der Membran mit zunehmendem Abstand zwischen Membran und elastischem Spielausgleichselement sich verringert. Daher sollte auch das zylindrische Zwischenstück möglichst lang ausgebildet sein.

Vorzugsweise sollte es aber mindestens in einem Abstand von der Membran an dem zylindrischen Zwischenstück angeordnet sein, der größer als der Durchmesser der Membran ist.

Sowohl ein Ausgleich von Herstellungstoleranzen als auch ein Abgleich auf Sollwerte der Einrichtung ist auf einfache Weise dadurch möglich, daß die Einrichtung durch Materialabtrag von der mit dem zylindrischen Zwischenstück verbundenen Membran abgleichbar ist. Dazu ist besonders ein gezielter Materialabtrag mittels Laser, durch Erodieren oder durch Schleifen geeignet.

Das zylindrische Zwischenstück kann vorzugsweise als Masseleiter ausgebildet sein, an dem an dem Halter befestigte masseleitende Federarme in Anlage sind, wobei die Federarme an der freien Stirnseite des Halteansatzes befestigt sein können und mit dem Bereich ihres freien Endes an der Innenwand des zylindrischen Zwischenstücks in Anlage sind.

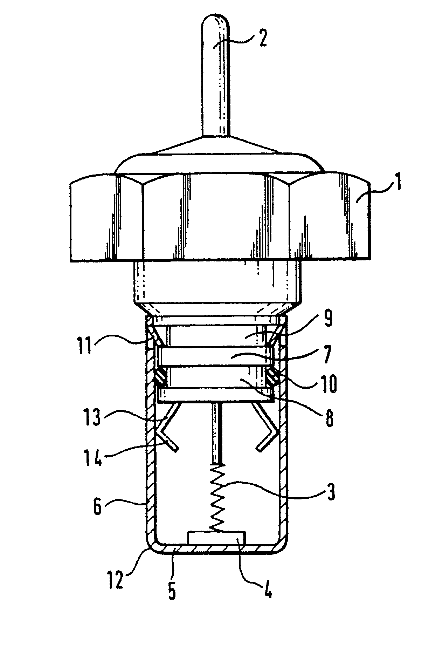

Ein Ausführungsbeispiel der Erfindung ist in der Zeichnung dargestellt und wird im folgenden näher beschrieben. Die einzige Figur der Zeichnung zeigt eine Einrichtung im Schnitt.

Diese Einrichtung weist eine Halterung 1 auf, mit der die Einrichtung an einer nicht dargestellten Wand eines Flüssigkeitsbehälters befestigbar ist. An der Halterung 1 ist ein nach außerhalb des Flüssigkeitsbehälters ragender elektrischer Anschluß 2 angeordnet, der über eine flexible elektrische Leitung 3 mit einem elektromechanischen Wandler 4, einem piezoelektrischen Bauelement verbunden ist.

Im eingebauten Zustand ragt der zum Wandler 4 gerichtete Teil der Einrichtung in den Flüssigkeitsbehälter. Der Wandler 4 ist fest auf einer Membran 5 angeordnet, die über ein zylindrisches Zwischenstück 6 mit der Halterung 1 verbunden ist. Dabei ist der Raum innerhalb des Zwischenstücks 6 gegenüber dem Innenraum des Flüssigkeitsbehälters dicht abgeschlossen.

Die Halterung 1 besitzt einen zylindrisch ausgebildeten Halteansatz 7, der mit Spiel von dem zylindrischen Zwischenstück 6 umgriffen ist. Der Halteansatz 7 weist an seiner zylindrischen Mantelfläche zwei nebeneinander angeordnete radial umlaufende Ringnuten 8 und 9 auf.

In der dem freien Ende des Halteansatzes näheren Ringnut 8 ist ein elastischer O-Ring 10 angeordnet, der mit seiner radial äußeren Fläche mit Vorspannung an der Innenwand des zylindrischen Zwischenstücks 6 in Anlage ist und dieses hält.

Im Bereich der der Halterung zugewandten Öffnung des Zwischenstücks 6 sind Ausklinkungen der Wand des Zwischenstücks 6 vorhanden, die mit ihren freien Enden radial nach innen in die Ringnut 9 ragend verformt sind und so Sicherungsarme 11 bilden, die eine axiale Relativbewegung zwischen Halteansatz 7 und zylindrischem Zwischenstück 6 verhindern.

Membran 5 und zylindrisches Zwischenstück 6 sind durch ein topfartiges einteiliges Bauteil gebildet, wobei die Membran 5 an ihrem radial umlaufenden Rand mit einem Radius 12 in das zylindrische Zwischenstück 6 übergeht.

Das aus Membran 5 und zylindrischem Zwischenstück 6 gebildete topfartige metallische Bauteil ist als Masseleiter ausgebildet, wobei an der freien Stirnseite des Halteansatzes 7 befestigte masseleitende Federarme 13 mit dem Bereich ihrer freien Enden 14 an der Innenwand des zylindrischen Zwischenstücks 6 mit Vorspannung in Anlage sind. Auf diese Weise wird zwar ein Massekontakt zum Zwischenstück 6 hergestellt, eine Schwingungsbeeinträchtigung der Membran aber vermieden.

**Patentansprüche**

1. Einrichtung zur Erfassung des Füllstands von insbesondere einer Flüssigkeit in einem Behälter, mit einem fest auf einer Membran (5) angeordneten elektromechanischen Wandler (4), durch den die Membran in Schwingungen versetzbar ist, und elektrischen Mitteln zur Feststellung der Schwingungen der Membran, sowie mit einer Halterung (1) der Membran, an der die Membran über ein zylindrisches Zwischenstück (6) befestigt ist, dadurch gekennzeichnet, daß die Halterung (1) einen Halteansatz (7) aufweist, der mit Spiel von dem zylindrischen Zwischenstück (6) umgreifbar ist, wobei das Zwischenstück (6) durch ein zwischen Halteansatz (7) und Zwischenstück (6) angeordnetes elastisches Spielausgleichselement (10) an dem Halteansatz (7) angeordnet ist.

2. Einrichtung nach Anspruch 1, dadurch gekennzeichnet, daß der Halteansatz (7) zylindrisch ausgebildet ist.

3. Einrichtung nach Anspruch 2, dadurch gekennzeichnet, daß der Halteansatz (7) eine an seiner zylindrischen Mantelfläche radial umlaufende Ringnut (8) aufweist, in der ein das Spielausgleichselement bildender O-Ring (10) angeordnet ist.

4. Einrichtung nach einem der vorhergehenden Ansprüche, dadurch gekennzeichnet, daß zwischen dem zylindrischen Zwischenstück (6) und dem Halteansatz (7) ein eine axiale Relativbewegung dieser beiden Teile verhinderndes Sicherungselement angeordnet ist.

5. Einrichtung nach Anspruch 4, dadurch gekennzeichnet, daß das zylindrische Zwischenstück (6) radial nach innen gerichtete Sicherungsarme (11) besitzt, die in eine Ausnehmung des Halteansatzes (7) ragen.

6. Einrichtung nach Anspruch 5, dadurch gekennzeichnet, daß die Ausnehmung eine an der zylindrischen Mantelfläche des Ansatzes (7) radial umlaufende Ringnut (9) ist.

7. Einrichtung nach Anspruch 5, dadurch gekennzeichnet, daß die Sicherungsarme (11) radial nach innen in die Ausnehmung des Ansatzes verformte Ausklinkungen der zylindrischen Wand des Zwischenstücks (6) sind.

8. Einrichtung nach einem der vorhergehenden Ansprüche, dadurch gekennzeichnet, daß Membran (5) und zylindrisches Zwischenstück (6) ein topfartiges einteiliges Bauteil bilden.

9. Einrichtung nach Anspruch 8, dadurch gekennzeichnet, daß die Membran (5) an ihrem radial umlaufenden Rand mit einem Radius (12) in das zylindrische Zwischenstück (6) übergeht.

10. Einrichtung nach einem der vorhergehenden Ansprüche, dadurch gekennzeichnet, daß das Spielausgleichselement im Bereich der der Halterung (1) zugewandten Öffnung des zylindrischen Zwischenstücks (6) angeordnet ist.

11. Einrichtung nach einem der vorhergehenden Ansprüche, dadurch gekennzeichnet, daß das Spielausgleichselement in einem Abstand von der Membran (5) an dem zylindrischen Zwischenstück (6) angeordnet ist, der größer als der Durchmesser der Membran (5) ist.

12. Einrichtung nach einem der vorhergehenden Ansprüche, dadurch gekennzeichnet, daß die Einrichtung durch Materialabtrag von der mit dem zylindrischen Zwischenstück (6) verbundenen Membran (5) abgleichbar ist.

13. Einrichtung nach einem der vorhergehenden Ansprüche, dadurch gekennzeichnet, daß das zylindrische Zwischenstück (6) als Masseleiter ausgebildet ist, an den an der Halterung (1) befestigte masseleitende Federarme (13) in Anlage sind.

14. Einrichtung nach Anspruch 13, dadurch gekennzeichnet, daß die Federarme (13) an der freien Stirnseite des Halteansatzes (1) befestigt sind und mit dem Bereich ihres freien Endes (14) an der Innenwand des zylindrischen Zwischenstücks (6) in Anlage sind.

## Claims

1. Device for measuring the level of, in particular, a liquid in a container, having an electromechanical transducer (4), which is arranged fixed on a diaphragm (5) and by which the diaphragm can be set into vibration, and electrical means for determining the vibrations of the diaphragm, and having a diaphragm mount (1) to which the diaphragm is attached via a cylindrical adaptor (6), characterised in that the mount (1) has a retaining shoulder (7) which can be embraced with play by the cylindrical adaptor (6), the adaptor (6) being arranged on the retaining shoulder (7) by means of an elastic play-eliminating element (10) arranged between the retaining shoulder (7) and adaptor (6).

2. Device according to Claim 1, characterised in that the retaining shoulder (7) is constructed cylindrically.

3. Device according to Claim 2, characterised in that the retaining shoulder (7) has an annular groove (8) running radially around its cylindrical lateral surface, in which a O-ring (10) forming the play-eliminating element is arranged.

4. Device according to one of the preceding claims, characterised in that there is arranged between the cylindrical adaptor (6) and the retaining shoulder (7) a locking element which prevents relative axial movement of these two parts.

5. Device according to Claim 4, characterised in that the cylindrical adaptor (6) has locking arms (11), which are directed radially inwards and project into a recess in the retaining shoulder (7).

6. Device according to Claim 5, characterised in that the recess is an annular groove (9) running radially around the cylindrical lateral surface of the shoulder (7).

7. Device according to Claim 5, characterised in that the locking arms (11) are notches in the cylindrical wall of the adaptor (6) which are deformed radially inwards into the recess in the shoulder.

8. Device according to one of the preceding claims, characterised in that membrane (5) and cylindrical adaptor (6) form a pot-like one-piece component.

9. Device according to Claim 8, characterised in that at its edge which runs round radially the diaphragm (5) merges into the cylindrical adaptor (6) by means of a radius (12).

10. Device according to one of the preceding claims, characterised in that the play-eliminating element is arranged in the region of the opening in the cylindrical adaptor (6) which faces the mount (1).

11. Device according to one of the preceding claims, characterised in that the play-eliminating element is arranged on the cylindrical adaptor (6) at a distance from the diaphragm (5) which is larger than the diameter of the diaphragm (5).

12. Device according to one of the preceding claims, characterised in that the device can be adjusted by removing material from the diaphragm (5) joined to the cylindrical adaptor (6).

13. Device according to one of the preceding claims, characterised in that the cylindrical adaptor (6) is constructed as an earthing conductor against which earth-conducting spring arms (13), attached to the mount (1), bear.

14. Device according to Claim 13, characterised in that the spring arms (13) are attached to the free end face of the retaining shoulder (1) and bear with the region of their free end (14) against the inner wall of the cylindrical adaptor (6).

**Revendications**

1. Dispositif destiné à mesurer le niveau, d'un liquide notamment, dans un récipient ou réservoir, comportant un transducteur (4) électromécanique, qui est fixé à une membrane (5) et par l'entremise duquel cette membrane peut être mise en vibration, un agencement électrique destiné à déterminer les vibrations de ladite membrane (5) et un support (1) pour cette dernière, auquel elle est fixée par l'intermédiaire d'un manchon (6) cylindrique, dispositif caractérisé en ce que le support (1) comporte un prolongement (7) de retenue, que le manchon (6) cylindrique entoure avec un certain jeu, ce manchon (6) étant relié au prolongement (7) par un élément élastique (10) de compensation de jeu, disposé entre ledit prolongement (7) et ledit manchon (6).

2. Dispositif selon la revendication 1, caractérisé en ce que le prolongement (7) de retenue est cylindrique.

3. Dispositif selon la revendication 2, caractérisé en ce que le prolongement (7) comporte, dans sa surface extérieure cylindrique, une gorge (8) circulaire, dans laquelle est disposé un joint torique (10) constituant l'élément de compensation du jeu.

4. Dispositif selon l'une des revendications précédentes, caractérisé en ce qu'un élément d'arrêt qui est disposé entre le manchon (6) cylindrique et le prolongement (7) de retenue, empêche ces deux derniers éléments de se déplacer axialement l'un par rapport à l'autre.

5. Dispositif selon la revendication 4, caractérisé en ce que le manchon (6) cylindrique comporte des bras d'arrêt (11) orientés radialement vers l'intérieur, qui pénètrent dans un dégagement du prolongement (7).

6. Dispositif selon la revendication 5, caractérisé en ce que le dégagement est une gorge (9) annulaire de la surface latérale cylindrique du prolongement (7).

7. Dispositif selon la revendication 5, caractérisé en ce que les bras d'arrêt (11) sont des cliquets, découpés dans la paroi cylindrique du manchon (6) et repoussés radialement vers l'intérieur et dans le dégagement du prolongement (7).

8. Dispositif selon l'une des revendications précédentes, caractérisé en ce que la membrane (5) et le manchon (6) cylindrique constituent un élément monobloc en forme de pot.

9. Dispositif selon la revendication 8, caractérisé en ce que le bord radial de la membrane (5) se raccorde par un arrondi (12) au manchon (6) cylindrique.

10. Dispositif selon l'une des revendications précédentes, caractérisé en ce que l'élément de compensation du jeu est disposé à hauteur de l'orifice, voisin du support (1), du manchon (6) cylindrique.

11. Dispositif selon l'une des revendications précédentes, caractérisé en ce que l'élément de compensation du jeu est disposé, par rapport à la membrane (5) et au manchon (6), à une distance qui est plus grande que le diamètre de cette membrane (5).

12. Dispositif selon l'une des revendications précédentes, caractérisé en ce qu'il peut être étalonné par enlèvement de matière sur la membrane (5) reliée au manchon (6) cylindrique.

13. Dispositif selon l'une des revendications précédentes, caractérisé en ce que le manchon (6) cylindrique constitue un conducteur à la masse, contre lequel sont appliqués des bras conducteurs (13) élastiques, fixés au support (1).

14. Dispositif selon la revendication 13, caractérisé en ce que les bras élastiques (13) sont fixés à la face d'extrémité libre du prolongement (7) de retenue et sont appliqués, à proximité de leurs extrémités (14) libres, contre la paroi inférieure du manchon (6) cylindrique.